# EUROPEAN PATENT APPLICATION

(11) **EP 2 327 942 A2**
(43) Date of publication of application: **01.06.2011**
(21) Application number: 11000755.6
(22) Date of filing: 01.02.2011
(51) Int. Cl.: F24J 2/52, H01L 31/042

(54) **Supporting device to anchor photovoltaic panels onto a roof**

(30) Priority: 02.02.2010 IT MI20100147
(71) Applicant: Officina Meccanica Maffioletti Dario s.r.l., 24060 Brusaporto (BG) (IT)
(72) Inventor: Maffioletti, Marcello, 24060 Brusaporto (BG) (IT); Bosi, Luciano, 24060 Brusaporto (BG) (IT)
(74) Representative: Checcacci, Giorgio

(57) **Abstract**

A supporting device (10) according to the invention, to anchor a first photovoltaic panel (P1) onto a roof (T), comprises a bottom plate (11) intended to be fixed to the roof (T) and to receive a frame portion (C) of the photovoltaic panel (P1) resting on it, and it is characterised in that it comprises a first hook-shaped element (21) with a first hooked portion (22) intended to hook to the first photovoltaic panel (P1), open in a first direction (X1) away from the first photovoltaic panel (P1) and intended to hook from below the frame portion (C) of the first photovoltaic panel (P1), and means (13) for fastening the first hook-shaped element (21) to the bottom plate (11) so that the first photovoltaic panel (P1) stays anchored onto the bottom plate (11). The device (10) hooks the photovoltaic panel (P1) from below, hooking with the hooked portion (22) to the frame portion (C); consequently, it is substantially invisible once it has been mounted, since it is hidden from sight by the photovoltaic panel itself (P1); moreover, it holds the photovoltaic panel (P1) against the roof (T) and a better contribution in terms of economic incentive is indeed thus facilitated.

## Description

The present invention concerns anchoring photovoltaic panels onto a roof, in particular a roof with a regular structure, such as a roof of fretted metal sheet.

The use of photovoltaic panels is increasingly more widespread, even on private buildings, both residential and industrial Indeed, in addition to the undoubtable advantages for the environment due to the use of a renewable source of energy like the sun, there are often substantial economic incentives of national or local authorities, which are greater as the electric power produced increases. This not only promotes the spreading of photovoltaic panels, but it often pushes users to install photovoltaic fields with a great amount of single panels, even beyond the electrical need of the building on which the field is installed. This leads to the fact that it is always more common for fields to be used, in which there are a great number of photovoltaic panels alongside one another, occupying almost the entirety of the available roof space.

In these conditions, it is important to be able to have simple anchoring systems, so as to be able to make the installation, maintenance and/or replacement of each single panel easy. For example, supporting devices are known comprising a lower part, intended to be bolted to the roof and intended to receive a section bar resting on it provided with guides inside which screws are fastened, which hold clamps with a hooked portion intended to hook above the frame of the photovoltaic panel; the hooked portion is thus open in a direction facing towards the photovoltaic panel and has a width that is substantially equal to the thickness of the frame of the photovoltaic panel. Means are also provided for fastening the hook-shaped clamp to the lower part so that the photovoltaic panel stays anchored onto the lower part.

However, in these known systems, the section bar and the fastening devices, create a space between the roof and the photovoltaic modules, subjecting them to wind, which by depression create traction force on the covering elements of the roof (sail effect); since these covering elements were not designed to withstand this stress, dangerous situations can be created, with the risk of lifting and even detachment of covering elements of the roof. Moreover, the hooked portions pass over the frame of the panels and are thus clearly visible after the installation has been completed, worsening the appearance of the photovoltaic field, since they interrupt and disturb the continuity that can be obtained by placing many panels alongside one another. This aspect is very important where (for example in Italy) there are economic incentives that depend upon the greater or lesser integration of the panels with the roof of the building.

In addition to these negative static and aesthetic effects, in the hooking systems described the installation and maintenance costs of the photovoltaic panels are high.

There is thus the problem of making a system for anchoring photovoltaic panels onto a roof, that is simple, that does not substantially stress the roof even in the case of strong wind, that is cost-effective, that has minimum visual impact and that has maximum architectural integration with the roof of the building.

Consequently, the present invention concerns a device according to claim 1; preferred characteristics are addressed in the dependent claims.

In particular, a supporting device according to the invention, to anchor onto a roof a first photovoltaic panel and a second photovoltaic panel, alongside the first photovoltaic panel at a predetermined distance from it, comprises a bottom plate intended to be fixed to the roof and to receive a frame portion of the first photovoltaic panel and of the second photovoltaic panel, resting on it, comprising:
- a first hook-shaped element with a first hooked portion intended to hook to the first photovoltaic panel, open in a first direction away from the first photovoltaic panel and intended to hook from below the frame portion of the first photovoltaic panel, and
- means for fastening the first hook-shaped element to the bottom plate so that the first photovoltaic panel stays anchored onto the bottom plate, characterised in that it further comprises:
- a second hook-shaped element with a second hooked portion open in a second direction -opposite to the first direction away from the second photovoltaic panel and intended to hook from below a frame portion of the second photovoltaic panel,
- means for fastening the second hook-shaped element to the bottom plate so that the second photovoltaic panel stays anchored onto the bottom plate by the second hook-shaped element.

A device having these characteristics hooks the photovoltaic panel from below, hooking with the hooked portion to the frame portion; consequently, it is substantially invisible once it has been mounted, since it is hidden from sight by the photovoltaic panel itself. Moreover, this device holds the photovoltaic panel against the roof and a better contribution in terms of economic incentive is indeed thus facilitated.

Advantageously, the first hooked portion has a width that is too small to enclose the thickness of the first and second photovoltaic panels, but that is big enough to enclose the thickness of the frame portion of the first and second photovoltaic panels, so as to ensure easy and precise hooking.

Thanks to the second hook-shaped element, the supporting device itself is used to anchor two photovoltaic panels alongside one another, making it possible to drastically reduce the total number of devices necessary to anchor all the photovoltaic panels alongside one another provided on the roof itself.

The means for fastening the first hook-shaped element to the bottom plate and the means for fastening the second hook-shaped element to the bottom plate can be independent from one another or -preferably- they can coincide with one another, so as to simplify the structure of the device and simultaneously reduce the operations necessary to mount it.

Preferably, each of said first and second hook-shaped element comprises a flattened base, said hooked portion being formed from an extension of said base bent into a U-shape above the base itself, so as to partially pass over it. This structure has a very simple construction, but it is nevertheless perfectly functional and easy to use.

Even more preferably, the bottom plate comprises a threaded hole, the second part of the flattened base of each hook-shaped element comprises a through hole, and said means for fastening the first and the second hook-shaped element to the bottom plate comprise a threaded member, inserted into the through holes of the overlapped hook-shaped elements and in screw engagement in the threaded hole of the bottom plate. In such a manner, the simultaneous mounting or dismounting of both hook-shaped elements is easily obtained with a single screwing operation. Moreover, the threaded member is accessible even when the photovoltaic panels are mounted; this ensures the possible dismounting of the hook-shaped elements of any one of the plurality of the supporting devices of all the photovoltaic panels mounted on the roof, without requiring the pre-emptive dismounting of other elements and/or other panels.

Preferably, the bottom plate is shaped on top with two parallel ridges, spaced apart by a distance corresponding to the width of the hook-shaped elements. These ridges form a sort of guide that facilitates the mounting of the hook-shaped elements and prevents their mutual rotation.

Alternatively, each of said first and second hook-shaped element comprises a flattened base, said hooked portion being formed from an extension of said base bent into an S-shape, parallel and spaced apart above the base itself.

Preferably, the base of each of said first and second hook-shaped element and the bottom plate are stably fixed together through welding or clinching, or else they are formed in one piece through blanking or form pressing. This embodiment can be preferred to shorten mounting operations of a series of photovoltaic panels on the roof, since it has less operations to carry out on site, on the roof, but has the drawback of allowing to dismount a single panel (for maintenance, repairing or replacement) only if the panel is not surrounded by other panels that are not desired to be uninstalled. It is thus suitable (and actually preferred) for embodiments with limited extension, at least in one direction, which comprise panels alongside no more than three other panels.

Further characteristics and advantages of the present invention shall become clearer from the following description of some of its embodiments, given with reference to the attached drawings. In such drawings:

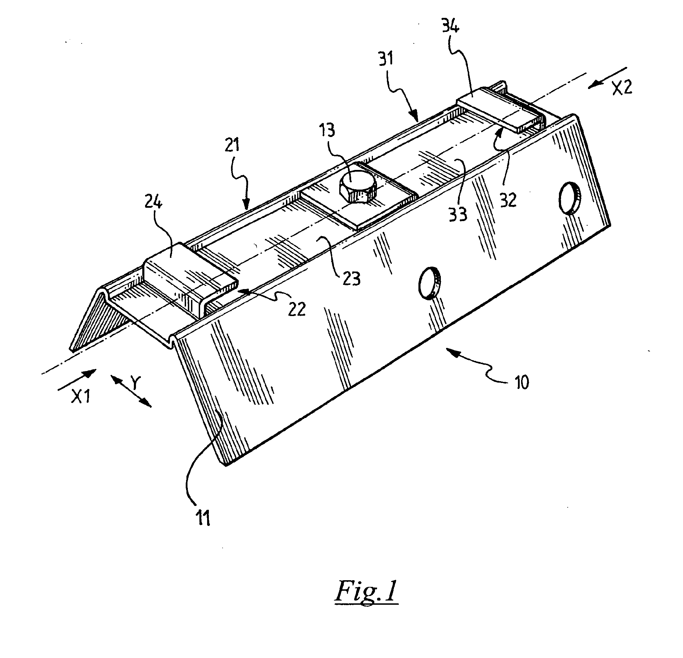

- fig. 1 is a perspective view of a device according to a first embodiment of the invention, with its parts assembled as if it were mounted onto a roof and as if two adjacent photovoltaic panels, not shown for the sake of clearer illustration of the device, were mounted on it;

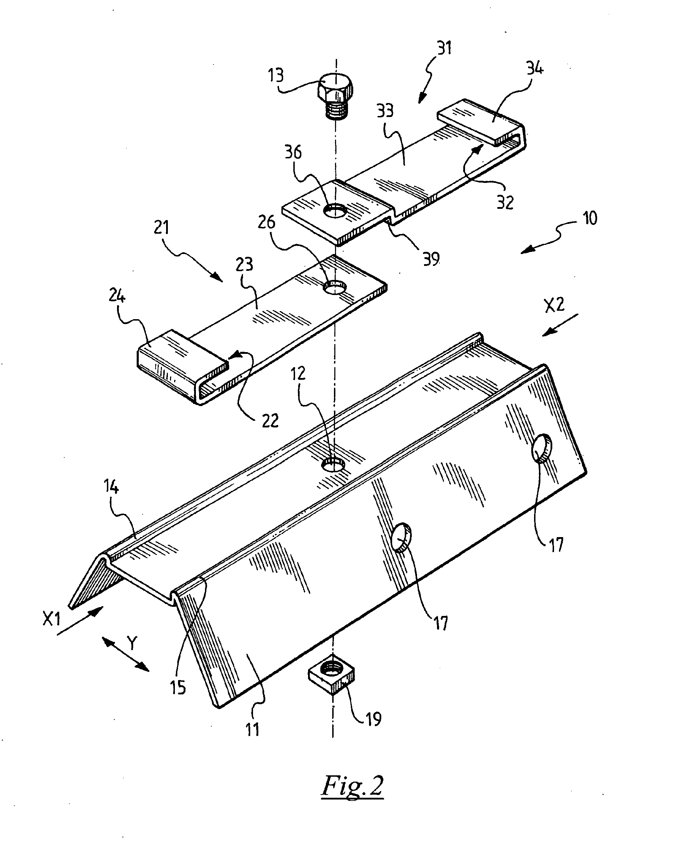

- fig. 2 is an exploded perspective view of the device of fig. 1;

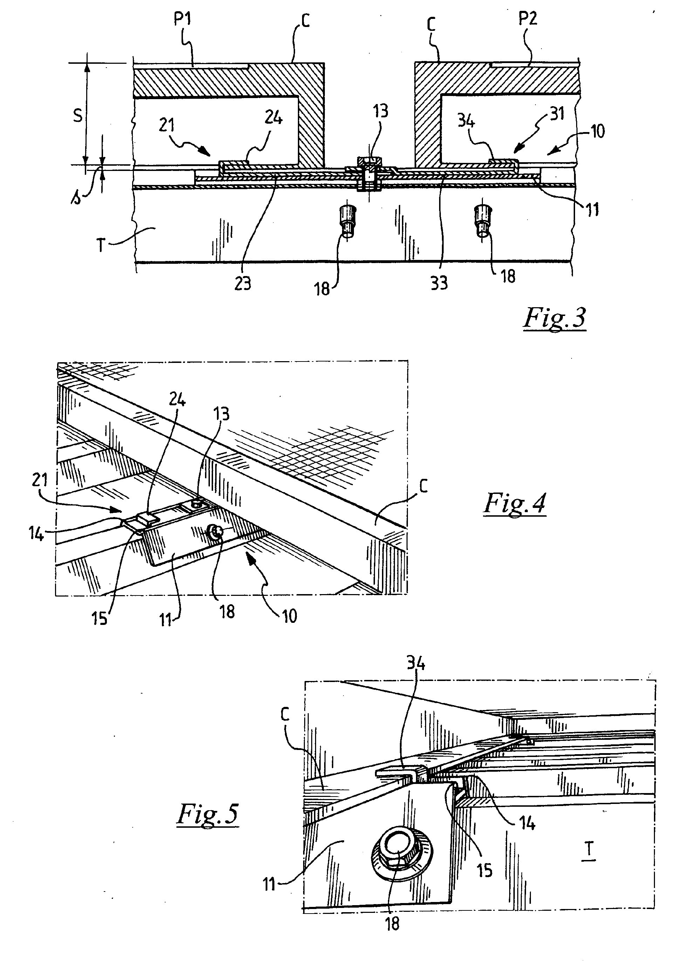

- fig. 3 is a section view of the device of fig. 1, assembled with two adjacent photovoltaic panels, that are partially visible;
- fig. 4 is a perspective view, in enlarged scale and taken from above, of a detail of the device of fig. 1, coupled with a photovoltaic panel;
- fig. 5 is a perspective view, in enlarged scale and taken from below, of a detail of the device of fig. 1, coupled with a photovoltaic panel;

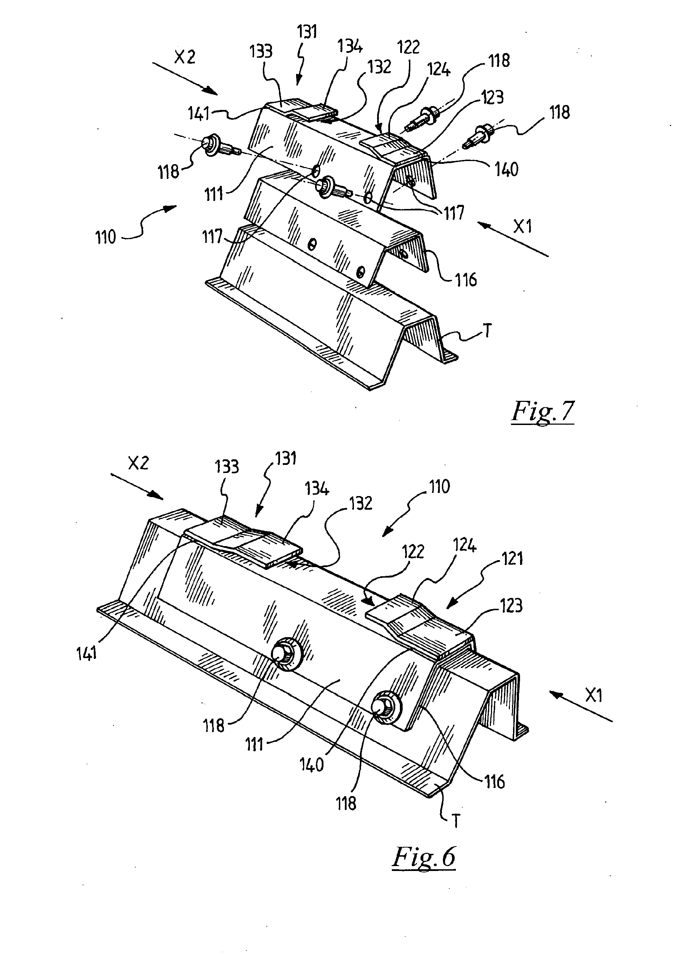

- fig. 6 is a perspective view of a device according to a second embodiment of the invention, mounted onto a roof of fretted metal sheet and with its parts assembled as if two adjacent photovoltaic panels, not shown for sake of clearer illustration of the device, were mounted on it;
- fig. 7 is an exploded perspective view of the device of fig. 4;

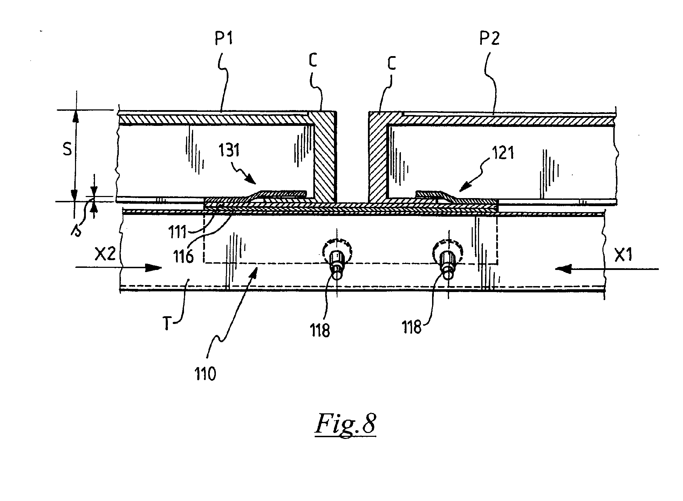

- fig. 8 is a section view of the device of fig. 4, assembled with two adjacent photovoltaic panels;
- fig. 9 is a perspective view of a photovoltaic field with two panels alongside one another, mounted by means of devices according to the invention, of any one of the aforementioned embodiments

In figures from 1 to 3, in accordance with a first embodiment of the invention, a supporting device to anchor a first photovoltaic panel P1 onto a roof T is wholly indicated with reference numeral 10. The supporting device 10 comprises a bottom plate 11 intended to be fixed onto the roof and to receive a frame portion C of the photovoltaic panel P1 resting on it and a first hook-shaped element 21 with a first hooked portion 22 intended to hook to the first photovoltaic panel P1, open in a first direction X1 away from the photovoltaic panel P1 and intended to hook from below the frame portion C of the first photovoltaic panel P1. The device 10 also comprises means for removably fastening the first hook-shaped element 21 to the bottom plate 11 so that the first photovoltaic panel P1 stays anchored onto the bottom plate 11.

The first hooked portion 22 has a width that is much smaller than the thickness S of the first photovoltaic panel and that is substantially equal to the thickness s of the frame portion C of the first photovoltaic panel P1; in such a way, the hooked portion 22 has a width that is sufficient to enclose the thickness s but that is not sufficient to enclose the thickness S.

The device 10 is preferably provided also to anchor a second photovoltaic panel P2 onto the roof, alongside the first photovoltaic panel P1 at a predetermined distance from it, and therefore also comprises a second hook-shaped element 31 with a second hooked portion 32 open in a second direction X2 -opposite to the first direction X1- away from the second photovoltaic panel P2 and intended to hook from below a frame portion C of the second photovoltaic panel P2, as well as means for removably fastening the second hook-shaped element 31 to the bottom plate 11 so that the second photovoltaic panel P2 stays anchored onto the bottom plate 11 by the second hook-shaped element 31.

Each of said first and second hook-shaped element 21, 31 comprises a flattened base, 23, 33; the hooked portion 22, 32 is formed by an extension 24, 34 of the base 23, 33, bent into a U-shape above the base 23, 33 itself, so as to partially pass over it.

The bottom plate 11 comprises a hole 12, that is directly threaded or -like in the case of the illustrated example- provided with a small plate 19 that is perforated and threaded, welded or glued to the bottom plate 11 in a position that is adjacent to the hole 12; the flattened base 23, 33 of each hook-shaped element 21, 31 comprises a through hole 26, 36, and the means for removably fastening the first and the second hook-shaped element 21, 31 to the bottom plate 11 coincide and comprise a single threaded screw 13, inserted into through holes 26, 36 of the overlapped hook-shaped elements 21, 31 and in screw engagement in the threaded hole 12 of the bottom plate 11. In order to promote the correct overlapping of the hook-shaped elements 21 and 31, the flattened base of one of the two (the base 33 of the second hook-shaped element 31 in the example of the device 10 illustrated) has a double folding 39, so that the flattened base 23 has two parallel and offset parts, at a distance equal to the thickness of the flattened base 23 itself.

Preferably, the bottom plate 11 is shaped on top with two parallel ridges 14 and 15, spaced apart by a distance corresponding to the width of the hook-shaped elements 21 and 31.

Finally, the device 10 comprises holes 17, formed in the bottom plate 11 in an asymmetric position, i.e. formed on the same half of the length of the bottom plate 11, for fastening to the roof through screws 18.

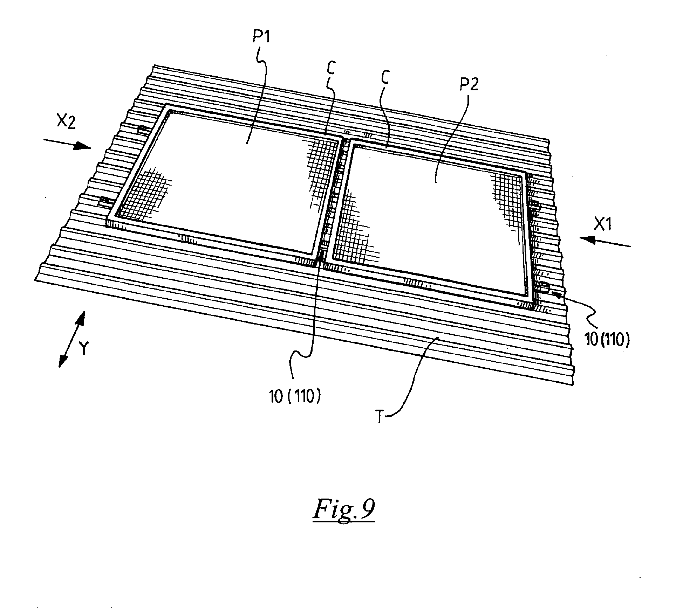

Using the device 10 for mounting photovoltaic panels onto a roof comprises the following operations, referring to the mounting of a pair of panels P1 and P2 arranged like in figure 9; of course, if the panels to be mounted are more numerous, the various steps will have to be repeated for all the panels.

Initially, the position of the first panel P1 is defined, preferably the one arranged highest, and as a consequence of this, the bottom plate 11 of a first device 10 is fixed to the roof, said plate 11 already being provided with the single first hook-shaped element 21 fixed through the screw 13; the second hook-shaped element 31 is not provided since in that position another photovoltaic panel to be mounted to the same device 10 is not provided. The fastening occurs through the screws 18 in the holes 17. The hooked portion 22 faces upwards, i.e. in the direction X1. According to the width of the panel P1, two or even more devices 10 can be provided, spaced apart and aligned in a direction Y perpendicular to the direction X1. It should be noted that the bottom plate 11 is shaped according to the shape of the roof T to which the device 10 must be applied; in the example illustrated, it has an angular section corresponding to that of a roof T of fretted metal sheet.

Once the first device 10 has been fixed, the panel P1 is mounted on it, resting in a slightly higher position with respect to the final one and making it then slide downwards until the frame portion C hooks to the device 10, inserting itself with its lower part into the hooked portion 22 until it is locked. The panel P1 is at this stage, so as to say, hanging from the first device 10.

The bottom plate 11 of a second device 10 is then mounted on the roof, together with the hook-shaped elements 21 and 31, at a lower portion of the frame C, below it. In this step, the panel P1 is slightly lifted, so as to allow the hooking element 31 to pass below it. The plate 11 with the hooking element 31 is then slid back, sliding along the bottom plate 11 between the two ridges 14 and 15 in the direction X2, until the lower part of the frame portion C is inserted in the hooked portion 32. Also in this step, the fastening occurs through the screws 18 in the holes 17; it should be noted that the asymmetric position of the holes 17 on the bottom plate 11 allows the screws 18 to be manoeuvred even if the bottom plate 11 has the panel P1 partially passing over it.

Thereby, the panel P1 is mounted, hooked onto the roof.

The first hook-shaped element 21 of the second device 10 is ready to receive the second panel P2, which can be, just like the first panel P1, by resting in a slightly lifted position, substantially in contact with the panel P1 that has already been mounted, and subsequent downward sliding until the frame C is hooked to the hooked portion 22 of the first hook-shaped element 21. Subsequently, the panel P2 is fastened to a third device 10, equipped with only the second hook-shaped element 31 since the panel P2 is the last one to be mounted.

If many panels are to be mounted, vertically, it will be continued in series, up to the last panel. If many panels are to be mounted, horizontally, it will be continued in a parallel manner, by mounting in the same way all the panels P1 alongside one another.

The panels P1 and P2 thus mounted are stably anchored to the roof, thanks to the hooking of the hook-shaped portions 22 and 32 onto the frames C. Moreover, thanks to the engagement of the hook-shaped elements 21 and 31 with the lower portion of the frame C, the devices 10 are substantially invisible and therefore do not have a negative impact upon the appearance of the group of photovoltaic panels. It should also be noted that the panels P1 and P2 are mounted right up close to the roof T and therefore are not subjected to wind action (sail effect),

In the case in which it is necessary to remove a panel from the roof, for maintenance or replacement, it is sufficient to intervene on just the panel involved, by unscrewing the screws 13 of the devices 10 that anchor that panel so as to remove only the hook-shaped elements 22, 32 that anchor that panel and by repositioning the screws 13 to fix again possible other hook-shaped elements 22, 32 that hook adjacent panels, that are not to be removed.

In figures from 6 to 8, a second embodiment of the invention is shown, which comprises a device 110 with a bottom plate 111 intended to be fixed to the roof T and to receive resting on it a frame portion C of a photovoltaic panel P1 and a first hook-shaped element 121 with a first hooked portion 122 intended to hook to the first photovoltaic panel P1, open in a first direction X1 away from the photovoltaic panel P1 and intended to hook from below the frame portion C of the first photovoltaic panel P1; the device 110 also comprises means for fastening the first hook-shaped element 121 to the bottom plate 111 so that the first photovoltaic panel P1 stays anchored onto the bottom plate 111.

The first hooked portion 112 has a width that is much smaller than the thickness S of the first photovoltaic panel and that is substantially equal to the thickness s of the frame portion C of the first photovoltaic panel P1; in such a way, the hooked portion 112 has a width that is sufficient to enclose the thickness s but that is not sufficient to enclose the thickness S.

The device 110 is preferably provided also to anchor a second photovoltaic panel P2 onto the roof T, alongside the first photovoltaic panel P1 at a predetermined distance from it, and therefore also comprises a second hook-shaped element 131 with a second hooked portion 132 open in a second direction X2 opposite to the first direction X1- away from the second photovoltaic panel P2 and intended to hook from below a frame portion C of the second photovoltaic panel P2, as well as means for fastening the second hook-shaped element 131 to the bottom plate 111 so that the second photovoltaic panel P2 stays anchored onto the bottom plate 111 by the second hook-shaped element 131.

Each of said first and second hook-shaped elements 121, 131 comprises a flattened base 123, 133; the hooked portion 122, 132 is formed by an extension 124, 134 of the base bent into an S-shape, parallel and spaced apart above the base 123, 133 itself. Each of said first and second hook-shaped elements 121, 131 is stably fixed to the bottom plate 111 by means of a respective welding 140, 141 of its flattened base 123, 133; said welding 140, 141 thus forms the aforementioned means for fastening the first and the second hook-shaped element 121 and 122 to the bottom plate 111 so that the first photovoltaic panel P1 stays anchored onto the bottom plate 111.

The device 11D then comprises, preferably, a contact insert 116, arranged between the bottom plate 111 and the roof T, so as to improve the mechanical contact between them, to insert a galvanic insulation and to provide a seal against the infiltration of rain water; in such a case, the insert 116 will of course be made from suitable insulating material. Finally, the device 110 comprises holes 117, formed in the bottom plate 111, to be fastened to the roof through screws 118.

The use of the device 110 for mounting photovoltaic panels onto a roof is partially analogous to that of the device 10, and provides for the following operations.

Initially, the position of the first panel P1 is defined, preferably the one arranged higher, and consequently a first device 110 is fixed to the roof. In this fastening step, below the bottom plate 111, the insert 116 is arranged and the fastening occurs through the screws 118 in the holes 117. The hooked portion 122 faces upwards, i.e. in the direction X1. According to the width of the panel P1, two or even more than two devices 110 can be provided, distanced apart and aligned with one another in a direction Y that is perpendicular to the direction X1. It should be noted that the bottom plate 111 and the insert 116 are shaped according to the shape of the roof T to which the device 110 must be applied; in the example illustrated, they have an angular section that corresponds to that of a roof T made from fretted metal sheet.

Once the first device 110 has been fixed, the panel P1 is mounted on it, by resting it in a slightly higher position with respect to the final one and then by making it slide downwards until the frame portion C hooks to the device 110, inserting itself with its lower part into the hooked portion 122 until it is locked. The panel P1 is at this point, so as to say, hanging from the first device 110.

A second device 110 is then mounted onto the roof. For such a purpose, the bottom plate 111, with the holes 117 facing downwards i.e. in the direction X2, is inserted below the panel P1 already partially mounted, lifting it slightly; the device 110 is then slid back, sliding in the direction X2, until the lower part of the frame portion C is inserted in the hooked portion 132. Even in this fastening step, below the bottom plate 11 an insert 16 is arranged and the fastening occurs through the screws 118 in the holes 117; it should be noted that the asymmetric position of the holes 117 on the bottom plate 111 allows the screws 118 to be manoeuvred even if the bottom plate 111 has the panel P1 partially passing over it.

The first hook-shaped element 121 of the second device 110 is ready to receive the second panel P2, that can be mounted just like the first panel P1, by resting it in a slightly lifted position, substantially in contact with the panel P1 that has already been mounted, and subsequent downward sliding until the frame C is hooked to the hooked portion 122 of the first hook-shaped element 121. Subsequently, the panel P2 is fixed to a third device 110, mounted in the same manner as illustrated above with reference to the second device 110.

If many panels are to be mounted, vertically, it will be continued in series, up to the last panel. If many panels are to be mounted, horizontally, it will be continued in a parallel manner, mounting in the same way all the panels P1 alongside one another.

The panels P1 and P2 thus mounted are stably anchored to the roof, thanks to the hooking of the hook-shaped portions 122 and 132 to the frames C. Moreover, thanks to the engagement of the hook-shaped elements 121 and 131 with the lower portion of the frame C, the devices 110 are substantially invisible and therefore do not have a negative impact on the appearance of the group of photovoltaic panels.

In the case in which it is necessary to remove a panel from the roof, for maintenance or replacement, it is possible to intervene on just the panel involved, as long as that panel is not alongside other panels in the direction X2. In such a case, by unscrewing the screws 118 of the devices 110 that anchor that panel it is possible to disengage the devices 110 from the panel and then possibly rearrange them if there is an adjacent panel (in the direction X1 or Y) that must stay on the roof.

If, on the other hand, a panel must be removed that is alongside another panel in the direction X2, it is first necessary to remove one or more panels so that the panel to be removed is not alongside other panels in the direction X2. This drawback makes the device 110 preferred in the case in which the photovoltaic field to be installed comprises, in the directions X1 and X2, a limited number of panels, for example two panels like in fig. 9; in this case, the greater simplicity of mounting allowed by the device 110 with respect to the device 10 will not be offset by excessive difficulty in the case in which it may be necessary to dismount single panels.

It should be noted that the device according to the invention can undergo numerous variations, without for this reason departing from the scope of the invention defined by the following claims. For example, the device 10 of the first embodiment of the invention may be equipped with an insert that is analogous to the insert 116 of the device 110 of the second embodiment, just like the device 110 may not have the insert 116.

## Claims

1. Supporting device (10; 110), to anchor onto a roof (T) a first photovoltaic panel (P1) and a second photovoltaic panel (P2), alongside the first photovoltaic panel (P1) a predetermined distance away from it, comprising a bottom plate (11; 111) intended to be fixed to the roof (T) and to receive a frame portion (C) of the first photovoltaic panel (P1) and of the second photovoltaic panel (P2) resting on it, comprising:
- a first hook-shaped element (21; 121) with a first hooked portion (22; 122) intended to hook to the first photovoltaic panel (P1), open in a first direction (X1) away from the first photovoltaic panel (P1) and intended to hook from below the frame portion (C) of the first photovoltaic panel (P2),
- means (13; 140, 141) for fastening the first hook-shaped element (21; 121) to the bottom plate (11; 111) so that the first photovoltaic panel (P1) stays anchored onto the bottom plate (11; 111; 211),
**characterised in that** it further comprises:
- a second hook-shaped element (31; 131) with a second hooked portion (32; 132) open in a second direction (X2) -opposite to the first direction (X1)-away from the second photovoltaic panel (P2) and intended to hook from below a frame portion (C) of the second photovoltaic panel (P2),
- means (13; 141) for fastening the second hook-shaped element (31; 131) to the bottom plate (11; 111) so that the second photovoltaic panel (P2) stays anchored onto the bottom plate (11; 111) by the second hook-shaped element (31; 131).

2. Device according to claim 1, wherein the first hooked portion (22; 122) has a width that is too small to enclose the thickness (S) of the first (P1) and second (P2) photovoltaic panels, but that is big enough to enclose the thickness (s) of the frame portion (C) of the first (P1) and second (P2) photovoltaic panels.

3. Device according to claim 1, wherein the means (13) for removably fastening the first hook-shaped element (21) to the bottom plate (11) and the means (13) for removably fastening the second hook-shaped element (31) to the bottom plate (11) coincide.

4. Device according to claim 1, wherein the means (140) for removably fastening the first hook-shaped element (121) to the bottom plate (111) and the means (141) for removably fastening the second hook-shaped element (121) to the bottom plate (111) are independent from one another.

5. Device according to claim 3, wherein each of said first (21) and second (31) hook-shaped element comprises a flattened base (23, 33), said hooked portion (22, 32) being formed from an extension (24, 34) of said base (23, 33) bent into a U-shape above the base itself, so as to partially pass over it.

6. Device according to claim 5, wherein the bottom plate (11) comprises a threaded hole (12, 19), the flattened base (23, 33) of each hook-shaped element (21, 31) comprises a through hole (26, 36), and said means for removably attaching the first and the second hook-shaped element to the bottom plate comprise a threaded member (13), inserted into the through holes (26, 36) of the overlapped hook-shaped elements (21, 31) and in screw engagement in the threaded hole (12, 19) of the bottom plate (11).

7. Device according to claim 5, wherein the bottom plate (11) is shaped on top with two parallel ridges (14, 15), spaced apart by a distance corresponding to the width of the hook-shaped elements (21, 31).

8. Device according to claim 3, wherein each of said first (121) and second (131) hook-shaped element comprises a flattened base (123, 133), said hooked portion (122, 132) being formed from an extension of said base (123, 133) bent into an S-shape, parallel and spaced apart above the base itself.

9. Device according to claim 8, wherein the base (123, 133) of each of said first (121) and second (131) hook-shaped elements and the bottom plate (111) are stably fixed together through welding (140, 141) or clinching or else they are formed in one piece through blanking or form pressing.
